# EUROPEAN PATENT SPECIFICATION

(11) **EP 2 375 687 B1**
(45) Date of publication and mention of the grant of the patent: **02.03.2016**
(21) Application number: 11170723.8
(22) Date of filing: 08.10.2008
(51) Int. Cl.: H04L 29/06, H04L 12/58, H04L 1/00

(54) **Method and device for graceful degradation for voice communication services**
Verfahren und Vorrichtung zur allmählichen Abschwächung für Sprachkommunikationsdienste
Procédé et dispositif de la dégradation progressive pour services de communication vocale

(30) Priority: 19.10.2007 US 999619 P; 08.02.2008 US 28400; 15.08.2008 US 192890; 15.08.2008 US 89417 P
(43) Date of publication of application: 12.10.2011
(62) Divisional of application: 08839365.7
(73) Proprietor: Voxer IP LLC, San Francisco CA 94107 (US)
(72) Inventor: Katis, Thomas, Jackson, WY Wyoming 83001-9475 (US); Panttaja, James, Healdsburg, CA California 95448 (US); Panttaja, Mary, Healdsburg, CA California 95448 (US); Ranney, Matthew, Oakland, CA California 94610 (US)
(74) Representative: Alton, Andrew

(56) References cited:
- EP-A- 1 202 531
- WO-A-2006/114673
- US-A1- 2005 144 247

## Description

This invention relates to voice communication, and more particularly, to the graceful degradation of voice communication services when network conditions prevent live or real-time communication.

Current wireless voice communications, such as mobile phones or radios, support only live communications. For communication to take place with existing wireless communication systems, a wireless network connection with a sufficient usable bit rate to support a live conversation must exist between the two wireless devices in communication with each other. If such a connection does not exist, then no communication can take place.

When a person is engaged in a conversation using their mobile phone, for example, a network connection between the phone and the local radio transceiver (i.e., a cell tower) of sufficient usable bit rate to support a live conversation must exist before any communication can take place. As long the mobile phone is within the range of the radio transceiver, the signal strength or usable bit rate is typically more than adequate for conducting phone conversations.

As the person using the mobile phone travels away from the radio transceiver, or they enter an area of poor coverage, such as in a tunnel or canyon, the usable bit rate or signal strength on the wireless network connection is typically reduced. If the distance becomes so great, or the reception so poor, the usable bit rate may be reduced beyond the range where communication may take place. Beyond this range, the user may no longer be able to continue an ongoing call or make a new call. Similarly, when too many users are conducting calls on the network at the same time, the total aggregate usable bit rate for all the calls may exceed the usable bit rate capacity of the radio transceiver. In such situations, certain calls may be dropped in an effort to preserve the usable bit rate or capacity for other calls. As the number of calls on the network decreases, or usable bit rate conditions on the wireless network improve, dropped users may again rejoin the network and make new calls as capacity on the network improves. In yet another example, in situations where there is severe radio interference, such as electrical or electromagnetic disturbances, intentional jamming of the wireless network, the antenna on a communication device or the radio transmitter is broken or not working properly, or the communication device and/or the radio transceiver have been improperly configured, the usable bit rate on the network connection may be insufficient for users to make calls or conduct live voice communications.

With current wireless voice communication systems, there is no persistent storage of the voice media of conversations. When a person engages in a conversation using either mobile phones or radios, there is no storage of the voice media of the conversations other than possibly what is necessary for transmission and rendering. Without persistent storage, the voice media of a conversation is irretrievably lost after transmission and rendering. There is no way to retrieve that voice media subsequent transmission or review. Consequently, wireless voice communication systems are reliant on network connections. If at any point the usable bit rate on the network is insufficient for a live conversation, regardless of the reason, there can be no communication. Mobile phones and radios are essentially unusable until the usable bit rate on the network improves to the point where live communications can commence again.

Wired communication networks may also have capacity problems when too many users are attempting to use the network at the same time or there are external interferences degrading the performance of the network. In these situations, calls are typically dropped and/or no new calls can be made in order to preserve usable bandwidth for other users. With wired voice communication systems, there is also typically no persistent storage of the voice media of a conversation. As a result, there is no way to transmit voice media from persistent storage at times when the usable bit rate on the wired network connection falls below what is necessary for maintaining a live conversation.

With most voice mail systems used with mobile or land-line phones, a network with sufficient usable bit rate to support a live conversation is needed before the voicemail system can be used. When a person is leaving a voice mail, a live connection is needed before a message can be left. Alternatively, the recipient must have a live connection before the message can be accessed and reviewed. With certain types of more advanced email systems, such as Visual voice mail, a recipient may download a received message and store it on their mobile phone for later review. With Visual voice mail, however, one can review a previously downloaded message when disconnected from the network or network conditions are poor. However, there is no way to generate and transmit messages when network conditions are inadequate to support a live connection. A network connection with a usable bit rate sufficient for maintaining a live conversation is still needed before a message can be generated and transmitted to another person.

EP 1202531 describes a method and apparatus for transmitting delay sensitive information (DSI) and non-delay sensitive information (NDSI) over a communication link where initial DSI packets are delayed to reduce the number of conflicts between DSI and NDSI. The delay applied to the DSI is based on parameters such as the transmission periodicity of the DSI packets and the packet length of the NDSI being transmitted

US 2005/144247 describes a method and system which enables a first and second client to have synchronous or asynchronous communication over a communications network. A first client sends a voice message to a second client that can store and playback the message before responding. When responding, the second client can either establish a synchronous voice conversation or, by responding at a later time, establish an asynchronous voice conversation or text chat.

WO 2006/114673 describes an audio message system (AMS) for sending sound or audio based messages during a chat session between mobile communication devices over a communications network. The AMS messages are created and transmitted in a three-step process, including: (i) recording of the message; (ii) creating an AMS message from the recording; and (iii) transmitting the AMS message after it has been created. The processing of received messages is performed in two successive steps: (i) receiving the message in full and, (ii) reviewing the message after the full message has been received in full. A received message can be automatically presented for review after it has been fully received.

A method and communication device for the graceful degradation of wireless and wired voice networks, which extend the range and/or capacity of these networks, is therefore needed.

An aspect of the invention provides a method for gracefully extending the range or capacity of voice communication over a communication network, comprising: persistently storing on a communication device voice media created using the communication device and intended for transmission over a communication network; and one of: transmitting the voice media as the voice media is created when the useable bit rate on the communication network is above that necessary to support the real-time transmission of the voice media; and transmitting the voice media out of storage at the available useable bit rate on the communication network when the useable bit rate on the communication network is below that necessary to support the real-time transmission of the voice media as the voice media is created.

A further aspect of the invention provides a communication device configured to perform the method aspect of the invention.

The invention may best be understood by reference to the following description taken in conjunction with the accompanying drawings, which illustrate specific embodiments of the invention.
Figure 1A is a diagram illustrating an exemplary wireless communication system of the present invention.
Figure 1B is a diagram of an exemplary wired communication device of the present invention.
Figure 2 is a plot illustrating the graceful degradation of wireless network services versus range in according to the present invention.
Figure 3 is a plot illustrating the graceful degradation of network services versus capacity according to the present invention.
Figure 4 is a plot illustrating the graceful degradation of network services in the presence of external interference according to the present invention.
Figure 5 is a plot illustrating adaptive live optimization for further extending the graceful degradation of services according to another embodiment of the present invention is shown.
Figure 6 is a diagram of a communication device with persistent storage in accordance with the present invention.

It should be noted that like reference numbers refer to like elements in the figures.

The invention will now be described in detail with reference to various embodiments thereof as illustrated in the accompanying drawings. In the following description, specific details are set forth in order to provide a thorough understanding of the invention. It will be apparent, however, to one skilled in the art, that the invention may be practiced without using some of the implementation details set forth herein. It should also be understood that well known operations have not been described in detail in order to not unnecessarily obscure the invention.

In U.S. application Serial Number 12/028,400 filed on February 8, 2008 and U.S. Application U.S. 12/192,890 filed on August 15, 2008, both entitled "Telecommunication and Multimedia Management Method and Apparatus", an improved voice and other media communication and management system and method is disclosed. The system and method provides one or more of the following features and functions: (i) enabling users to participate in multiple conversation types (MCMS), including live phone calls, conference calls, voice messaging, consecutive (MCMS-C) or simultaneous (MCMS-S) communications; (ii) enabling users to review the messages of conversations in either a live mode or a time-shifted mode (voice messaging); (iii) enabling users to seamlessly transition a conversation between a synchronous "live" near real-time mode and a time shifted mode; (iv) enabling users to participate in conversations without waiting for a connection to be established with another participant or the network. This attribute allows users to begin conversations, participate in conversations, and review previously received time-shifted messages of conversations even when there is no network available, when the network is of poor quality, or other participants are unavailable; (v) enabling the system to save media payload data at the sender and, after network transmission, saving the media payload data at all receivers; (vi) enabling the system to organize messages by threading them sequentially into semantically meaningful conversations in which each message can be identified and tied to a given participant in a given conversation; (vii) enabling users to manage each conversation with a set of user controlled functions, such as reviewing "live", pausing or time shifting the conversation until it is convenient to review, replaying in a variety of modes (e.g., playing faster, catching up to live, jump to the head of the conversation) and methods for managing conversations (archiving, tagging, searching, and retrieving from archives); (viii) enabling the system to manage and share presence data with all conversation participants, including online status, intentions with respect to reviewing any given message in either the live or time-shifted mode, current attention to messages, rendering methods, and network conditions between the sender and receiver; (iix) enabling users to manage multiple conversations at the same time, where either (a) one conversation is current and all others are paused (MCMS); (b) multiple conversations are rendered consecutively (MCMS-C), such as but not limited to tactical communications; or (c) multiple conversations are active and simultaneously rendered (MCMS-S), such as in a stock exchange or trading floor environment; and (ix) enabling users to store all conversations, and if desired, persistently archive them in a tangible medium, providing an asset that can be organized, indexed, searched, transcribed, translated and/or reviewed as needed. For more details on the Telecommunication and Multimedia Management Method and Apparatus, see the above-mentioned U.S. application Serial Numbers 12/028,400 and 12/192, 890.

The salient feature of the above-described communication system with regard to the graceful degradation of voice communication services is the persistent storage of the voice media of conversations. As noted above with prior art or legacy voice wired and wireless communication systems, no voice transmissions can take place when the usable bit rate on the network connection is insufficient to support live communications. With the persistent storage, however, voice transmissions may occur from storage. Voice transmissions therefore do not have to occur as the voice media is being generated. Instead, at times when the usable bit rate is insufficient for live transmissions, the voice media may be transmitted from persistent storage as network conditions permit. When transmitting from persistent storage, a certain amount of latency may be introduced during the back and forth transmissions of the conversation. The ability to transmit out of persistent storage, however, effectively extends the usability of the network beyond the range and/or capacity where conventional wireless or wired networks would otherwise fail. As a result, communications can still take place, even when usable bit rate conditions on the network are poor or constrained beyond where previously no communication could take place.

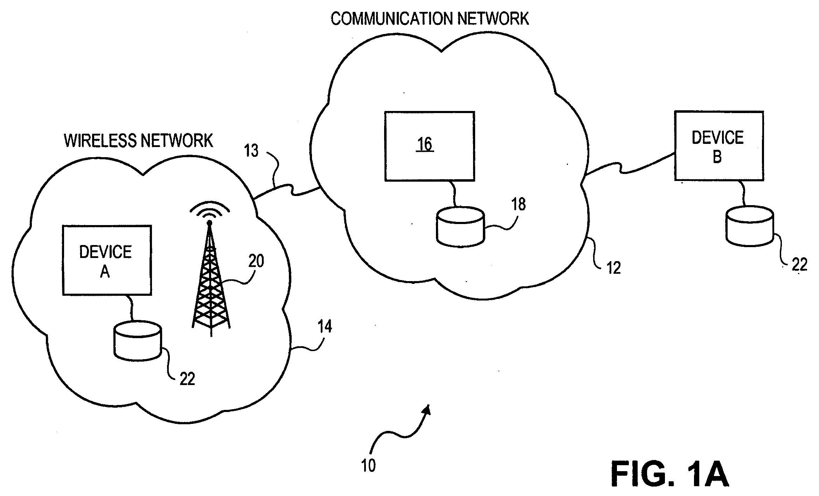

Referring to Figure 1A, a diagram illustrating an exemplary wireless voice communication system of the present invention is shown. The exemplary communication system 10 includes a communication network 12 and a wireless network 14 for enabling voice communication between a wireless device A within the wireless network 14 and a second communication device B connected to the network 12. A gateway connection 13 connects the communication network 12 and the wireless network 14. The communication network 12 may include one or more hops 16 between the wireless network 14 and the second communication device B. Each hop includes a storage element 18 for the persistent storage of media. The communication device A, which is a wireless device, such as either a mobile phone or a radio, connects through a wireless network connection with the wireless network 14 through a radio transceiver 20. The communication devices A and B each include a storage element 22 for the persistent storage of media respectively.

When a conversation takes place between device A and device B, a network connection is made between the two devices through the communication network 12 and the wireless network 14. All voice media of the conversation, regardless if it was transmitted or received, is persistently stored in the storage elements 22 of devices A and B as well as in the storage element 18 of each hop on the network 12 between the two devices. For more details on the persistent storage of the media at each communication device and on the network, see the above-mentioned U.S. application Serial Numbers 12/028,400 and 12/192, 890.

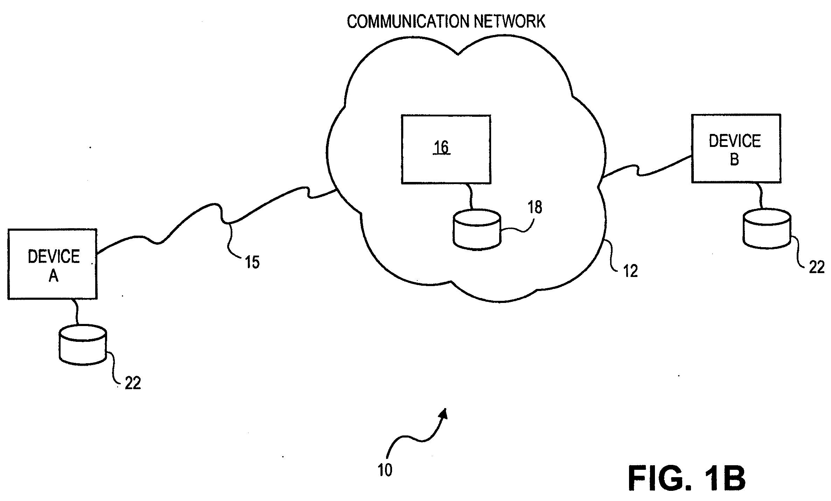

Referring to Figure 1B, a diagram illustrating another exemplary voice communication system of the present invention is shown. In this embodiment, both devices A and B are connected to communication network 12. In this embodiment, device A is connected to the network 12 through a wired connection 15. When a conversation takes place between device A and device B, a network connection is established between the two devices across network 12. One or more hops 16, each with persistent storage 18, may be required in establishing the network connection between the devices.

It should be noted that the specific network configuration and the communication devices illustrated in Figures 1A and 1B are exemplary. In no way, however, should either particular configuration be construed as limiting. In various embodiments, networks 12 and 14 can both be wireless, wired, or any combination thereof. Also, either communication device A or device B can each be either wired or wireless devices. The communication devices A and B can also be two nodes in the same wireless or wired networks or two nodes in different networks. If nodes in different networks, the two networks can communicate directly with one another, or they may communicate through any number gateways or hops in intermediate wired or wireless communication networks. In addition, the capability of each communication device to persistently store voice media of a conversation may vary. For the sake of simplicity, the network connection illustrated in Figures 1 A and 1 B is between just two communication devices. The present invention, however, may be used with voice conversations involving any number of wireless or wired communication devices. In the embodiment illustrated in both Figures 1A and 1B, both devices A and B locally and persistently store the media of the conversation. Alternatively, device A may locally and persistently store media, while device B does not. In yet another embodiment, the media for either device A or device B can be persistently stored on a storage device 18 of a hop 16 on the network 12 on behalf either device A or device B respectively. Regardless of the actual configuration, the only requirement for implementing the graceful degradation for device A is at device A and at least one other location, which may be at device B or at any intermediate hop 16 between the two devices.

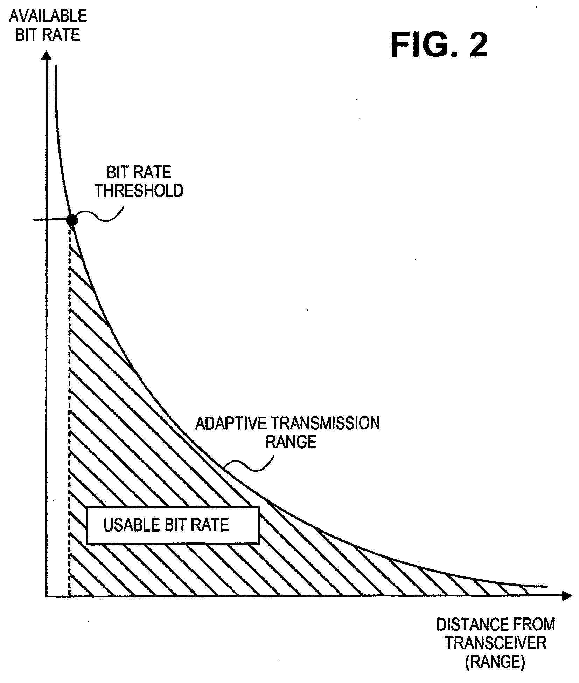

Figures 2 through 4 illustrate the graceful degradation of services with respect to range, capacity and external interferences that may affect the network respectively. It should be understood that the graceful degradation of services with respect to range is applicable only to wireless networks. The graceful degradation of services with regard to capacity and external interferences, however, equally applies to both wired and wireless networks.

Referring to Figure 2, a plot illustrating the graceful degradation of wireless services versus range in according to the present invention is illustrated. The diagram plots available usable bit rate on the network on the vertical axis verses the distance the communication device A is from the radio transceiver 20 on the horizontal axis. When the communication device A is relatively close, the available usable bit rate on the network is high. But as the communication device A travels away from the radio transceiver 20, or enters a region of reduced signal strength such as a tunnel or canyon, the usable bit rate on the network connection is reduced, as represented by the downward slope of the usable bit rate curve on the plot.

As the signal strength decreases, the amount of bit rate loss experienced on the network connection will also typically increase. At a certain point, a bit rate threshold is exceeded. Below this point, the bit rate loss typically becomes too large to maintain a live conversation with conventional wireless networks. In other words, the bit rate defines a minimum bit rate throughput sufficient for maintaining near real-time communication.

In one embodiment, the sending device A ascertains when the usable bit rate on the network connection falls below the bit rate threshold by: (i) receiving one or more reports each including a measured transfer rate at which bits transmitted over the network connection safely arrive at a recipient over a predetermined period of time; (ii) computing the usable bit rate on the network connection based on the received one or more reports; and (iii) comparing the computed usable bit rate with the bit rate threshold. The reports are generated by the recipient and sent to device A over the network connection. The receipt reports may include a notation of missing, corrupted or reduced bit rate representations of voice media as well as other network parameters such jitter.

In one embodiment, the bit rate throughput threshold is set at eighty percent (80%) of the bit rate throughput needed to transmit and decode the full bit rate representation of the voice media at the same rate the voice media was originally encoded. It should be noted that this percentage may vary and should not be construed as limiting. The throughput percentage rate may be higher or lower.

The portion of the usable bit rate curve below the bit rate threshold is defined as the adaptive transmission range. When the usable bit rate on the network is in the adaptive transmission range, device A transmits the media from persistent storage. As a result, the usable bit rate below the threshold becomes usable.

The amount of latency associated with transmission below the throughput threshold will vary, typically depending on the range between the communication device A and the radio transceiver 20. If the communication device A is at a range where the bit rate loss is just below the threshold, the amount of latency may be inconsequential. As signal strength decreases, however, latency will typically become progressively greater. As latency increases, the practicality of conducting a voice conversation in the live or real-time mode decreases. Beyond the point where a live voice conversation is no longer practical, voice communication can still take place, but in a time-shifted mode. A user may generate a voice message, which is persistently stored. As usable bit rate conditions on the network permit, transmissions of the media occur from persistent storage. Alternatively, when receiving messages, the voice media may trickle in over the network, also as usable bit rate conditions permit. When the quality or completeness of the received voice media becomes sufficiently good as transmissions are received, they may be retrieved from persistent storage and reviewed or rendered at the receiving communication device. Communication can therefore still take place when signal strength is poor, due to either device A being a relatively far distance from a transceiver 20 or in a location of poor coverage, such as in a tunnel or canyon.

As illustrated in the plot, the available usable bit rate gets progressively smaller as the range from the radio transceiver 20 increases. Eventually the usable bit rate is reduced to nothing, meaning the communication device A is effectively disconnected from the wireless network 14. The persistent storage of media on the communication device A still allows limited communication capabilities even when disconnected from the network. Messages can be generated and stored on communication device A while disconnected from the network. As the device moves within the adaptive transmission range, the usable bit rate range is used for the transmission of the messages. Alternatively, the user of communication device A may review previously received messages while disconnected from the network and receive new messages as usable bit rate on the network permits.

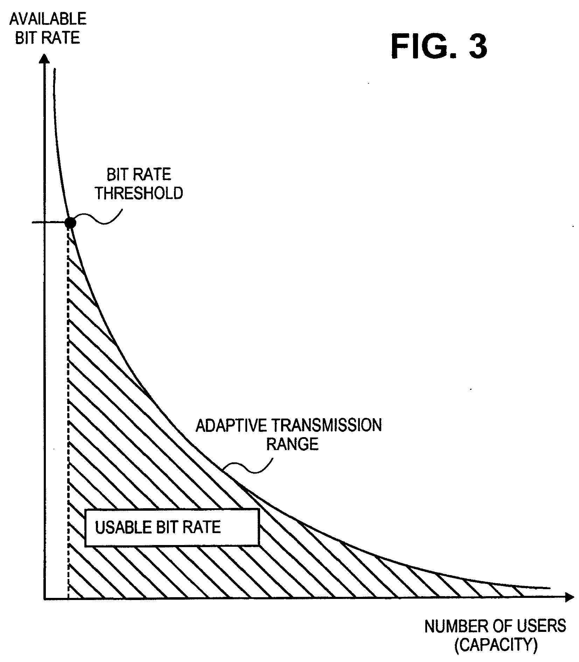

Referring to Figure 3, a plot illustrating the graceful degradation of wireless services versus the number of users (i.e., capacity) is shown. As illustrated in the Figure, the available usable bit rate per user increases as the number of users or capacity decreases and vice-versa. As capacity increases, the usable bit rate decreases. Eventually, the bit rate threshold is crossed. Below this threshold, all users of the network are forced to operate in the adaptive transmission range when sending and receiving voice messages. In an alternative embodiment, only certain users may be forced into the adaptive transmission range to preserve the usable bit rate of the system for other users who will continue to operate with a usable bit rate above the throughput threshold. The system may decide which users are provided either full or reduced service based on one or more priority schemes, such different levels of subscription services, those first on the network have higher priority than those that have recently joined the network, or any other mechanism to select certain users over other users.

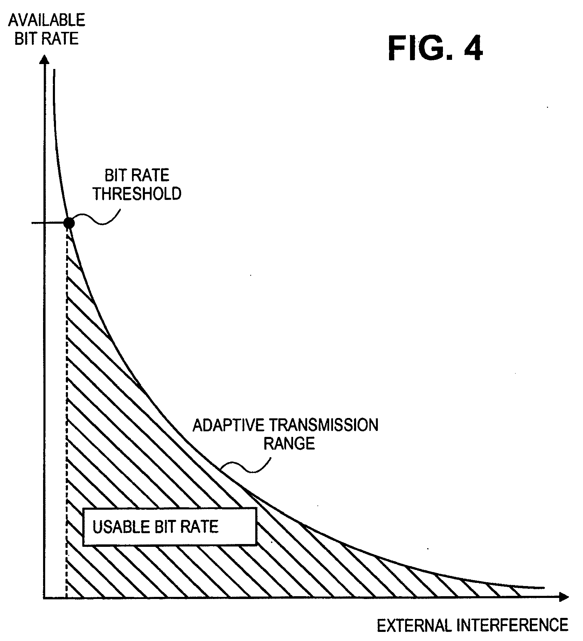

Referring to Figure 4, a plot illustrating the graceful degradation of services in the presence of an external interference is shown. In this diagram, as the severity of the external interference increases, usable bit rate decreases and vice versa. In situations where the available usable bit rate falls below the bit rate threshold, the user of communication device A may continue communicating in the adaptive transmission range in the same manner as described above. The use of persistent storage of media and the managing of transmissions to meet available usable bit rate therefore increases system robustness and gracefully extends the effective range and capacity of services in situations where external interference would otherwise prevent communication.

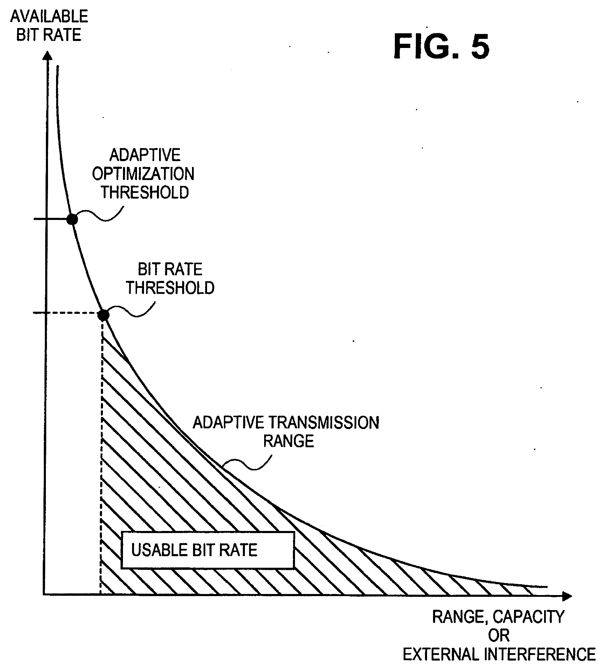

Referring to Figure 5, a plot illustrating adaptive live optimization for further extending the graceful degradation of wired and wireless services according to another embodiment is shown. In the plot, the usable bit rate curve includes an adaptive optimization threshold and the bit rate threshold. In the above-mentioned U.S. application Serial Numbers 12/028,400 and 12/192,890, adaptive live optimization techniques for maintaining a conversation in the live or real-time mode when usable bit rate on the network falls below the adaptive optimization threshold are described. These adaptive live optimization techniques have the net effect of pushing the bit rate threshold down the usable bit rate curve. In other words, by applying the adaptive live optimization techniques, the amount of available usable bit rate needed on the network for conducting a live conversation is reduced. This is evident in the Figure 5, which shows the bit rate threshold pushed further down the usable bit rate curve relative to the plots illustrated in Figures 2, 3 and 4.

With adaptive live optimization, media is sent from the sending device (e.g., device A) to the receiving device in successive transmission loops. Within each transmission loop, the sending node ascertains if the instantaneous usable bit rate is sufficient to transmit both time-sensitive and the not time sensitive media available for transmission. If there is sufficient usable bit rate on the network, then both types of media are transmitted. The time sensitive media is sent using first packets with a first packetization interval and a first payload size at a rate sufficient for a full bit rate representation of the media to be reviewed upon receipt by the recipient. The non time-sensitive media on the other hand is transmitted using second packets with a second interval set for network efficiency, where the second packet interval is typically larger than the first packetization interval.

The time-sensitivity of the media is determined by either a declared or inferred intent of a recipient to review the media immediately upon receipt. The full bit rate representation of the media is derived from when the media was originally encoded. Typically this means when a person speaks into their phone or radio, the received analog media is encoded and digitized. This encoded media is referred to herein as the full bit rate representation of the media. The sending node ascertains usable bit rate on the network based on receipt reports from the receiving node. The receipt reports include measured network parameters, such the corrupted or missing packets (i.e., media loss) as well as possibly other parameters, including jitter for example.

If the usable bit rate is inadequate for transmitting both types of available media, then the sending node ascertains if there is enough usable bit rate on the network connection for transmitting just the time-sensitive media. If so, the time-sensitive media is transmitted at the first packetization interval and first payload size and at the rate sufficient for the full bit rate representation to be reviewed upon receipt. The transmission of the not time-sensitive media is deferred until usable bit rate in excess of what is needed for time-sensitive transmissions becomes available.

If the usable bit rate on the network connection is not sufficient for sending just the time-sensitive media, then several techniques to reduce the number of bits used to represent the time-sensitive media is applied. In a first technique, the number of bits included in the first payloads is reduced and the reduced payload sized packets are then transmitted at the first packetization interval. In other words, the number of bits used to represent each unit of time (i.e., time-slice) of voice media is reduced relative to the full bit rate representation of the voice media. The reduction of the bits per payload may be accomplished by adjusting codec settings, using different codecs, applying a compression algorithm, or any combination thereof.

If there still is not sufficient bandwidth, then the packetization interval used to transmit the packets with the reduced bit payloads is progressively increased. By increasing the packetization interval, latency is introduced. Eventually, if the packetization interval is increased too much, then it becomes impractical to maintain the conversation in the live or real-time mode.

Lastly, the adaptive live optimization controls the rate of transmitted and received voice transmissions to meet the usable available bit rate on the network connection. As bit rate becomes available, available voice media is either sent or received at a rate determined by usable bit rate conditions on the network. Consequently, communication can still take place. The adaptive live optimization therefore enables conversations to continue when network conditions would otherwise prevent live communications.

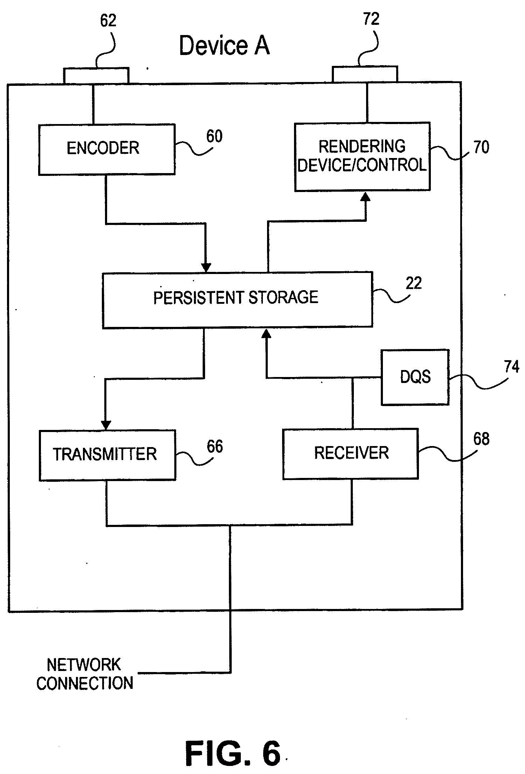

Referring to Figure 6, a diagram of device A is illustrated. The device A includes an encoder 60 configured to receive analog voice signals from a microphone 62, the persistent storage device 22, a transmitter 66, a receiver 68, a rendering/control device 70 and a speaker 72. During voice communications, the user of device A will periodically generate voice media by speaking into the microphone 62. The encoder 60 encodes or digitizes the voice media, generating a full bit rate representation of the voice media, which is persistently stored in device 22. The transmitter 66 is responsible for (i) receiving receipt reports from a recipient, (ii) calculating the usable bit rate on the network connection, (iii) ascertaining if the usable bit rate exceeds or is below the bit rate threshold sufficient for live communication, and (iv) either (a) transmits the full bit rate representation of the voice media when the threshold is exceeded or (b) generates and transmits only time-sensitive and/or a reduced bit rate version of the voice media, commensurate with the usable bit rate, when the usable bit rate is less than the threshold. Alternatively, the receiver 68 stores the voice media received over the network connection in persistent storage device 64. When the received media is of sufficient completeness, it may be retrieved from persistent storage by rendering/contol device 70 and played through speaker 72 for listening or review by the user. The review of media may occur in either a near real-time mode or in a time-shifted mode. When in the time-shifted mode, the media is retrieved from the persistent storage device 22 and rendered. For more details on the operation of device A, see the above-mentioned U.S. application Serial Numbers 12/028,400 and 12/192,890.

A data quality store (DQS) and manager 74 is coupled between the receiver 68 and the persistent storage device 22. The data quality store and manager 74 is responsible for noting any missing, corrupted or reduced bit rate versions of the voice media received over the network connection in the data quality store. The DQS and manager 74 are also responsible for transmitting requests for retransmission of any voice media (or other types of received media) noted in the data quality store. When the requested media is received after the request for retransmission is satisfied, the notation corresponding to the media is removed from the DQS. This process is repeated until a complete copy of the media is received and persistently stored, wherein the complete copy is a full bit rate representation of the media as originally encoded by the originating device. In this manner, both the sending and receiving communication devices are able to maintain synchronous copies of the voice (and other types) of media of a conversation.

In one embodiment of device A, the transmitter 66 may transmit voice or other media directly from encoder 60 in parallel with the persistent storage in device 22 when the user of the device A is communicating in the real-time mode. Alternatively, the media can first be written in persistent storage 22 and then transmitted from storage. With the latter embodiment, any delay associated with the storage occurs so fast that it is typically imperceptible to users and does not interfere or impede with the real-time communication experience of the user. Similarly, received media can be rendered by device 70 in parallel with persistent storage or serially after persistent storage when in the real-time mode.

The aforementioned description is described in relation to a wired or wireless communication devices. It should be understood that the same techniques and principles of the present invention also apply to the hops between a sending and a receiving pair in either a wireless or wired voice network. In the case of a hop 16, voice media is typically not generated on these devices. Rather these devices receive voice media from another source, such as a phone, radio or another hop on the network, and are responsible for optionally persistently storing the received voice media and forwarding the voice media on to the next hop or the recipient as described above.

It should also be understood that the present invention may be applied to any voice communication system, including mobile or cellular phone networks, police, fire, military taxi, and first responder type communication systems, legacy circuit-based networks, VoIP networks, the Internet, or any combination thereof.

Device A may be one of the following: land-line phone, wireless phone, cellular phone, satellite phone, computer, radio, server, satellite radio, tactical radio or tactical phone The types of media besides voice that may be generated on device A and transmitted may further include video, text, sensor data, position or GPS information, radio signals, or a combination thereof.

The present invention provides a number of advantages. The range of wireless voice networks is effectively extended as communication may continue beyond the throughput threshold. In addition, the present invention may increase the number of effective users or capacity that may use either a wireless or wired voice communication system. Rather than dropping users when system usable bit rate is overwhelmed, the present invention may lower the usable bit rate below the throughput threshold for some or all users until usable bit rate conditions improve. Lastly, the present invention increases the robustness of a both wireless and wired communication system in dealing with external interferences.

Although many of the components and processes are described above in the singular for convenience, it will be appreciated by one of skill in the art that multiple components and repeated processes can also be used to practice the techniques of the system and method described herein. Further, while the invention has been particularly shown and described with reference to specific embodiments thereof, it will be understood by those skilled in the art that changes in the form and details of the disclosed embodiments may be made without departing from the scope of the invention. For example, embodiments of the invention may be employed with a variety of components and should not be restricted to the ones mentioned above. It is therefore intended that the invention be interpreted to include all variations that fall within the scope of the claims.

## Claims

1. A method for gracefully extending the range or capacity of voice communication over a communication network (12), comprising:
persistently storing (22) on a communication device voice media created using the communication device and intended for transmission over a communication network; and
transmitting (66) the voice media as the voice media is created (60) when the useable bit rate on the communication network is above that necessary to support the real-time transmission of the voice media; and
transmitting (66) the voice media out of storage (22) at the available useable bit rate on the communication network when the useable bit rate on the communication network is below that necessary to support the real-time transmission of the voice media as the voice media is created.

2. The method of claim 1, further comprising receiving voice media at the communication device at the available useable bit rate on the communication network when the useable bit rate is below that necessary to support the real-time transmission.

3. The method of claim 2, further comprising persistently storing on the communication device the received voice media.

4. The method of claim 1, wherein transmitting the stored voice media out of storage further comprises varying the amount of latency during the transmission so that the transmission bit rate meets the usable bit rate on the communication network.

5. The method of any of the preceding claims, further comprising:
ascertaining the usable bit rate on the network from receipt reports received from a receiving node on the communication network;
determining if the ascertained usable bit rate on the network falls below a bit rate threshold, the bit rate threshold defining a bit rate throughput sufficient for maintaining real-time communication; and
transmitting the stored voice media out of storage when the ascertained usable bit rate on the network falls below the bit rate threshold.

6. The method of claim 5, wherein the bit rate threshold is 80% of the bit rate throughput needed to transmit and decode the encoded voice media at the same rate the voice media was originally encoded.

7. The method of any of the preceding claims, further comprising:
encoding (60) the voice media created using the communication device; and
persistently storing the encoded voice media in a storage location (22) located on the communication device.

8. The method of claim 1, further comprising:
ascertaining time-sensitive voice media among all the available voice media ready for transmission, wherein time-sensitive voice media is determined by either a declared or inferred intent of a recipient to review the media immediately upon receipt;
generating a reduced bit rate representation of the time-sensitive voice media when the ascertained usable bit rate on the communication network falls below a bit rate threshold, the reduced bit rate representation using fewer bits per unit of time than the encoded voice media; and
transmitting the reduced bit rate representation of the time-sensitive voice media when the ascertained usable bit rate on the network falls below a bit rate threshold.

9. The method of claim 8, wherein transmitting the reduced bit rate representation of the time-sensitive voice media further comprises, when packetizing the time-sensitive voice media for transmission, using one of the following:
(a) one or more different codec settings;
(b) one or more different codecs;
(c) a compression algorithm; or
(d) any combination of (a) through (c).

10. The method of any of claims 8 or 9, wherein transmitting the reduced bit rate representation of the time-sensitive voice media further comprises increasing the packetization interval used to transmit the time-sensitive voice media.

11. The method of any of claims 8 through 10, wherein transmitting the reduced bit rate representation of the time-sensitive voice media further comprises adjusting the transmission rate at which packets containing the time-sensitive voice media are transmitted.

12. The method of claim 1, further comprising:
ascertaining when the usable bit rate on the communication network is reduced to nothing;
persistently storing voice media created using the communication device when the usable bit rate on the communication network is reduced to nothing;
delaying the transmission of the voice media generated using the communication device when the usable bit rate on the communication network is reduced to nothing; and
transmitting the voice media from storage as the usable bit rate on the communication network increases.

13. The method of claim 3, further comprising persistently storing voice media on the communication device as transmissions are received over the communication network so that a complete copy of the voice media is received and persistently stored.

14. The method of claim 13, further comprising controlling rendering to render the received voice media either in a real-time mode as the voice media is received over the communication network or in a time-shifted mode by retrieving and rendering the media out of storage.

15. A computer readable medium storing an application executable by a processing unit to perform the method of any of claims 1 to 14.

16. A communication device configured to perform the method of any of claims 1 to 14.

## Patentansprüche

1. Verfahren zum Erhöhen der Reichweite oder Kapazität von Sprachkommunikation über ein Kommunikationsnetz (12) unter Abstrichen, umfassend:
persistentes Speichern (22) von einem Sprachmedium in einer Kommunikationsvorrichtung, wobei das Sprachmedium mit der Kommunikationsvorrichtung erzeugt worden und zur Übertragung über ein Kommunikationsnetz vorgesehen ist; und
Übertragen (66) des Sprachmediums während das Sprachmedium erzeugt (60) wird, wenn die in dem Kommunikationsnetz nutzbare Bitrate über jener liegt, welche zum Unterstützen der Echtzeitübertragung des Sprachmediums erforderlich ist; und
Übertragen (66) des Sprachmediums aus dem Speicher (22) heraus mit der in dem Kommunikationsnetz verfügbaren nutzbaren Bitrate, wenn die nutzbare Bitrate in dem Kommunikationsnetz unter jener liegt, welche zum Unterstützen der Echtzeitübertragung des Sprachmediums erforderlich ist, während das Sprachmedium erzeugt wird.

2. Verfahren gemäß Anspruch 1, ferner umfassend ein Empfangen von einem Sprachmedium in der Kommunikationsvorrichtung mit der in dem Kommunikationsnetz verfügbaren nutzbaren Bitrate, wenn die nutzbare Bitrate unter jener liegt, welche zum Unterstützen der Echtzeitübertragung erforderlich ist.

3. Verfahren gemäß Anspruch 2, ferner umfassend ein persistentes Speichern des empfangenen Sprachmediums in der Kommunikationsvorrichtung.

4. Verfahren gemäß Anspruch 1, wobei ein aus einem Speicher heraus erfolgendes Übertragen des gespeicherten Sprachmediums ferner ein Variieren des Umfangs einer Latenz während der Übertragung umfasst, sodass die Übertragungsbitrate der in dem Kommunikationsnetz nutzbaren Bitrate entspricht.

5. Verfahren gemäß einem jeden der vorhergehenden Ansprüche, ferner umfassend:
Bestimmen der in dem Netzwerk nutzbaren Bitrate aus von einem Empfangsknoten in dem Kommunikationsnetz bezogenen Empfangsberichten;
Ermitteln, ob die bestimmte, in dem Netzwerk nutzbare Bitrate eine Bitratenschwelle unterschreitet, wobei die Bitratenschwelle einen Bitratendurchsatz definiert, welcher zum Aufrechterhalten von Echtzeitkommunikation genügt; und
aus dem Speicher heraus erfolgendes Übertragen des gespeicherten Sprachmediums, wenn die in dem Netzwerk bestimmte nutzbare Bitrate die Bitratenschwelle unterschreitet.

6. Verfahren gemäß Anspruch 5, wobei die Bitratenschwelle 80% jenes Bitratendurchsatzes ist, welcher zum Übertragen und Decodieren des codierten Sprachmediums mit der gleichen Rate, mit welcher das Sprachmedium ursprünglich codiert wurde, erforderlich ist.

7. Verfahren gemäß einem jeden der vorhergehenden Ansprüche, ferner umfassend:
Codieren (60) des mit der Kommunikationsvorrichtung erzeugten Sprachmediums; und
persistentes Speichern des codierten Sprachmediums an einem in der Kommunikationsvorrichtung vorgesehenen Speicherplatz (22).

8. Verfahren gemäß Anspruch 1, ferner umfassend:
Bestimmen eines zeitempfindlichen Sprachmediums unter allen verfügbaren übertragungsbereiten Sprachmedien, wobei ein zeitempfindliches Sprachmedium entweder durch eine erklärte oder erschlossene Absicht eines Empfängers, das Medium sofort bei Empfang zu prüfen, ermittelt wird;
Erzeugen einer bitratenreduzierten Fassung des zeitempfindlichen Sprachmediums, sofern die bestimmte, in dem Kommunikationsnetz nutzbare Bitrate eine Bitratenschwelle unterschreitet, wobei die bitratenreduzierte Fassung weniger Bits pro Zeiteinheit benötigt als das codierten Sprachmedium; und
Übertragen der bitratenreduzierten Fassung des zeitempfindlichen Sprachmediums, wenn die bestimmte, in dem Kommunikationsnetz nutzbare Bitrate unter eine Bitratenschwelle fällt.

9. Verfahren gemäß Anspruch 8, wobei ein Übertragen der bitratenreduzierten Fassung des zeitempfindlichen Sprachmediums ferner beim Paketieren des zeitempfindlichen Sprachmediums zur Übertragung einen Einsatz eines der Folgenden umfasst:
(a) eine oder mehrere verschiedene Codec-Einstellungen;
(b) einen oder mehrere verschiedene Codecs;
(c) einen Kompressionsalgorithmus; oder
(d) jede Kombination aus (a) bis (c).

10. Verfahren gemäß einem der Ansprüche 8 oder 9, wobei ein Übertragen der bitratenreduzierten Fassung des zeitempfindlichen Sprachmediums ferner ein Vergrößern des zum Übertragen des zeitempfindlichen Sprachmediums eingesetzten Paketierungsintervalls umfasst.

11. Verfahren gemäß einem der Ansprüche 8 bis 10, wobei ein Übertragen der bitratenreduzierten Fassung des zeitempfindlichen Sprachmediums ferner ein Anpassen der Übertragungsrate umfasst, mit welcher das zeitempfindliche Sprachmedium enthaltenden Pakete übertragen werden.

12. Verfahren gemäß Anspruch 1, ferner umfassend:
Bestimmen, wann die in dem Kommunikationsnetz nutzbare Bitrate zu nichts reduziert ist;
persistentes Speichern eines mit der Kommunikationsvorrichtung erzeugten Sprachmediums, wenn die in dem Kommunikationsnetzwerk nutzbare Bitrate zu nichts reduziert ist;
Aufschieben der Übertragung des mit der Kommunikationsvorrichtung erzeugten Sprachmediums, wenn die in dem Kommunikationsnetz nutzbare Bitrate zu nichts reduziert ist; und
aus einem Speicher heraus erfolgendes Übertragen des Sprachmediums, wenn sich die in dem Kommunikationsnetz nutzbare Bitrate erhöht.

13. Verfahren gemäß Anspruch 3, ferner umfassend ein persistentes Speichern eines Sprachmediums in der Kommunikationsvorrichtung, während Übertragungen über das Kommunikationsnetz empfangen werden, sodass eine komplette Kopie des Sprachmediums empfangen und persistent gespeichert wird.

14. Verfahren gemäß Anspruch 13, ferner umfassend ein Steuern einer Wiedergabe zum Wiedergeben des empfangenen Sprachmediums entweder in einem Echtzeitmodus während das Sprachmedium über das Kommunikationsnetz empfangen wird oder in einem zeitversetzten Modus durch ein aus einem Speicher heraus erfolgendes Empfangen und Wiedergeben des Mediums.

15. Rechnerlesbares Medium, welches eine durch eine Verarbeitungseinheit ausführbare Applikation zum Ausführen des Verfahrens gemäß einem der Ansprüche 1 bis 14 speichert.

16. Kommunikationsvorrichtung, welche dazu eingerichtet ist, das Verfahren gemäß einem der Ansprüche 1 bis 14 auszuführen.

## Revendications

1. Procédé pour étendre progressivement la portée ou la capacité de communication vocale sur un réseau de communication (12), comprenant le fait
de stocker (22) de manière permanente sur un dispositif de communication un contenu vocal créé en utilisant le dispositif de communication et destiné à la transmission sur un réseau de communication ; et
de transmettre (66) le contenu vocal à mesure que le contenu vocal est créé (60) lorsque le débit binaire utilisable sur le réseau de communication est supérieur à celui nécessaire pour assurer la transmission en temps réel du contenu vocal ; et
de transmettre (66) le contenu vocal hors du stockage (22) au débit binaire utilisable disponible sur le réseau de communication lorsque le débit binaire utilisable sur le réseau de communication est inférieur à celui nécessaire pour assurer la transmission en temps réel du contenu vocal à mesure que le contenu vocal est créé.

2. Procédé de la revendication 1, comprenant en outre le fait de recevoir un contenu vocal au niveau du dispositif de communication au débit binaire utilisable disponible sur le réseau de communication lorsque le débit binaire utilisable est inférieur à celui nécessaire pour assurer la transmission en temps réel.

3. Procédé de la revendication 2, comprenant en outre le fait de stocker de manière permanente sur le dispositif de communication le contenu vocal reçu.

4. Procédé de la revendication 1, dans lequel la transmission du contenu vocal stocké hors du stockage comprend en outre le fait de faire varier le temps de latence pendant la transmission de sorte que le débit binaire de transmission soit conforme au débit binaire utilisable sur le réseau de communication.

5. Procédé de l'une des revendications précédentes, comprenant en outre le fait :
de vérifier le débit binaire utilisable sur le réseau à partir de rapports de réception reçus à partir d'un noeud de réception sur le réseau de communication ;
de déterminer si le débit binaire utilisable vérifié sur le réseau chute en dessous d'un seuil de débit binaire, le seuil de débit binaire définissant une vitesse de débit binaire suffisante pour maintenir la communication en temps réel ; et
de transmettre le contenu vocal stocké hors du stockage lorsque le débit binaire utilisable vérifié sur le réseau chute en dessous du seuil de débit binaire.

6. Procédé de la revendication 5, dans lequel le seuil de débit binaire est de 80% de la vitesse de débit binaire nécessaire pour transmettre et décoder le contenu vocal codé au même débit auquel le contenu vocal a été initialement codé.

7. Procédé de l'une des revendications précédentes, comprenant en outre le fait :
de coder (60) le contenu vocal créé en utilisant le dispositif de communication ; et
de stocker de manière permanente le contenu vocal codé dans un emplacement de stockage (22) situé sur le dispositif de communication.

8. Procédé de la revendication 1, comprenant en outre le fait :
de vérifier un contenu vocal sensible au temps parmi tous les contenus vocaux disponibles prêts pour la transmission, où un contenu vocal sensible au temps est déterminé soit par une intention déclarée ou inférée d'un destinataire de revoir le contenu immédiatement lors de la réception ;
de générer une représentation de débit binaire réduit du contenu vocal sensible au temps lorsque le débit binaire utilisable vérifié sur le réseau de communication chute en dessous d'un seuil de débit binaire, la représentation de débit binaire réduit utilisant moins de bits par unité de temps que le contenu vocal codé ; et
de transmettre la représentation de débit binaire réduit du contenu vocal sensible au temps lorsque le débit binaire utilisable vérifié sur le réseau chute en dessous d'un seuil de débit binaire.

9. Procédé de la revendication 8, dans lequel la transmission de la représentation de débit binaire réduit du contenu vocal sensible au temps comprend en outre, lors de la mise en paquets du contenu vocal sensible au temps pour la transmission, le fait d'utiliser l'un des éléments suivants :
(a) un ou plusieurs paramètre(s) de codec différent(s) ;
(b) un ou plusieurs codec(s) ;
(c) un algorithme de compression ; ou
(d) une combinaison quelconque de (a) à (c).

10. Procédé de l'une des revendications 8 et 9, dans lequel la transmission de la représentation de débit binaire réduit du contenu vocal sensible au temps comprend en outre le fait d'augmenter l'intervalle de mise en paquets utilisé pour transmettre le contenu vocal sensible au temps.

11. Procédé de l'une des revendications 8 à 10, dans lequel la transmission de la représentation de débit binaire réduit du contenu vocal sensible au temps comprend en outre le fait de régler le débit de transmission auquel des paquets contenant le contenu vocal sensible au temps sont transmis.

12. Procédé de la revendication 1, comprenant en outre le fait :
de vérifier le moment où le débit binaire utilisable sur le réseau de communication est réduit à néant ;
de stocker de manière permanente un contenu vocal créé en utilisant le dispositif de communication lorsque le débit binaire utilisable sur le réseau de communication est réduite à néant ;
de retarder la transmission du contenu vocal généré en utilisant le dispositif de communication lorsque le débit binaire utilisable sur le réseau de communication est réduit à néant ; et
de transmettre le contenu vocal à partir du stockage à mesure que le débit binaire utilisable sur le réseau de communication augmente.

13. Procédé de la revendication 3, comprenant en outre le fait de stocker de manière permanente un contenu vocal sur le dispositif de communication à mesure que des transmissions sont reçues sur le réseau de communication de sorte qu'une copie complète du contenu vocal soit reçue et stockée de manière permanente.

14. Procédé de la revendication 13, comprenant en outre le fait de commander le rendu pour rendre le contenu vocal reçu soit dans un mode en temps réel à mesure que le contenu vocal est reçu sur le réseau de communication ou dans un mode décalé dans le temps par la récupération et le rendu du contenu vocal hors du stockage.

15. Support lisible par ordinateur stockant une application exécutable par une unité de traitement pour réaliser le procédé de l'une des revendications 1 à 14.

16. Dispositif de communication configuré pour réaliser le procédé de l'une des revendications 1 à 14.
